# EUROPEAN PATENT APPLICATION

(11) **EP 3 671 149 A1**
(43) Date of publication of application: **24.06.2020**
(21) Application number: 19169981.8
(22) Date of filing: 17.04.2019
(51) Int. Cl.: G01J 3/433, G01J 3/02, G01J 1/42, G01N 21/17

(54) **SYSTEM AND METHOD FOR GENERATING AND DETECTING TERAHERTZ RADIATION**

(30) Priority: 21.12.2018 EP 18215727
(71) Applicant: FRAUNHOFER-GESELLSCHAFT zur Förderung der angewandten Forschung e.V., 80686 München (DE)
(72) Inventor: LIEBERMEISTER, Lars, 10587 Berlin (DE); GLOBISCH, Björn, 10587 Berlin (DE); NELLEN, Simon, 10587 Berlin (DE); SARTORIUS, Bernd, 14052 Berlin (DE)
(74) Representative: Pfenning, Meinig & Partner mbB

(57) **Abstract**

The invention relates to a system for measurements by means of terahertz radiation, the system comprising a transmitter antenna (1) for generating the terahertz radiation, a receiver antenna (2) for detecting the terahertz radiation, a laser system for generating a first component of laser light having a first wavelength and a second component of laser light having a second wavelength different from the first wavelength and for emitting an optical beat signal obtained by superimposing the first and the second components of laser light and a control unit (8) for controlling the laser system, wherein the laser system is optically coupled to the transmitter antenna (1) via a first optical path (7) and to the receiver antenna (2) via a second optical path (7'). The control unit (8) is configured to tune or switch at least one of the first wavelength and the second wavelength such that a thereby modulated beat frequency of the optical beat signal scans or jumps over a frequency interval of at least 1kHz at a frequency change rate of more than 1 THz/s, wherein a difference between an optical length of the first optical path (7) and an optical length of the second optical path (7') is such that a first signal propagation delay of a signal propagating, as the optical beat signal, from the laser system to the transmitter antenna (1) and, converted into the terahertz radiation, from the transmitter antenna (1) to the receiver antenna (2), differs from a second signal propagation delay of the optical beat signal propagating from the laser system to the receiver antenna (2) by a time difference (Dt) corresponding to a time interval in which the modulated beat frequency is changed by a frequency change of at least 0.1 kHz. The invention also relates to a corresponding method for generating and detecting terahertz radiation.

## Description

The invention relates to a system for measurements by means of terahertz radiation and to a corresponding method for generating and detecting terahertz radiation.

A terahertz system of the type described here comprises a transmitter antenna for generating the terahertz radiation, a receiver antenna for detecting the terahertz radiation, a laser system for generating a first component of laser light having a first wavelength and a second component of laser light having a second wavelength different from the first wavelength and for emitting an optical beat signal obtained by superimposing the first and the second components of laser light, a control unit for controlling the laser system, and an evaluation unit for analyzing an output signal of the receiver antenna, wherein each of the transmitter antenna and the receiver antenna comprises a photosensitive element and wherein the laser system is optically coupled to the photosensitive element of the transmitter antenna via a first optical path and to the photosensitive element of the receiver antenna via a second optical path for activating the transmitter antenna and the receiver antenna by the optical beat signal.

Terahertz systems of this kind are known and described, for example, in prior art document US 9,354,168 B2. A similar prior art can be found in document US 8,975,584 B2. For measurements made with those known systems, a phase or time delay of the optical beat signal activating one of the antennas needs to be tuned in order to scan a received terahertz wave, even in cases where only an amplitude of the terahertz wave is to be measured while no phase information is required. In the prior art, this is done by components such as variable optical delay circuits that need to be controlled accordingly during a measurement. A consequence is that the terahertz system has a rather complex structure and that each measurement is quite complicated and takes a relatively long time.

It is, therefore, an object of the invention to suggest a system for measurements using terahertz radiation that has a simpler structure and a corresponding measuring method that is both easier and faster.

According to the invention, this problem is solved by a system for measurements by means of terahertz radiation according to claim 1 and by a method according to claim 10. Optional features of particular embodiments of the suggested system and method can be found in the dependent claims.

According to the invention, the control unit of the system is configured to tune or switch at least one of the first wavelength and the second wavelength such that a thereby modulated beat frequency of the optical beat signal scans or jumps over a frequency interval of at least 1kHz at a frequency change rate of more than 1THz/s, wherein a difference between an optical length of the first optical path and an optical length of the second optical path is such that a first signal propagation delay of a signal propagating, as the optical beat signal, from the laser system through the first optical path to the photosensitive element of the transmitter antenna and, converted into the terahertz radiation having a frequency corresponding to the beat frequency, from the transmitter antenna to the receiver antenna, differs from a second signal propagation delay of the optical beat signal propagating from the laser system through the second optical path to the photosensitive element of the receiver antenna by a time difference corresponding to a time interval in which the beat frequency, when modulated that way, is changed by a frequency change of at least 0.1 kHz.

This results in a frequency difference between the optical beat signal arriving at the receiver antenna and the terahertz radiation arriving there at the same time, this frequency difference corresponding to the said frequency change. Due to this frequency difference, a wave of the terahertz radiation received by the receiver antenna is effectively scanned by the optical beat signal activating the receiver antenna. An effect of this is an output signal of the receiver antenna having a frequency corresponding to the said frequency difference and having an amplitude which directly reflects a strength of the received terahertz radiation. Therefore, the strength of the received terahertz can be detected without a need of any additional device for scanning the terahertz wave by varying a phase or signal propagation delay of the optical beat signal in any of the two optical paths. Furthermore, power losses may be avoided as no additional component is needed in any of the optical paths. Optical amplifiers, which have been used in comparable known devices, may be dispensed with for this reason. Therefore, the suggested system may be used as a particularly efficient and comparatively simple terahertz sensor system. It may, in particular, be used for efficiently analyzing a sample using terahertz radiation by placing the sample in a ray path between the transmitter antenna and the receiver antenna and by analyzing how the output signal is influenced thereby.

It should be noted that the transmitter antenna and the receiver antenna do not need to be seperated. In particular embodiments, they may be given by or share parts, such as conductors, of one common antenna structure. This may be an option, in particular, if the terahertz radiation is to be detected after being reflected by a sample to be analyzed.

Typically, the evaluation unit comprises an electrical circuit configured for frequency selectively measuring a share of the output signal having a frequency corresponding to the frequency change or an average or effective frequency change of the optical beat signal over the said time difference.

Hereby, at least a strength of the terahertz radiation detected by the receiver antenna can easily and directly be measured. To this end, the electrical circuit may comprise a high-pass filter or a lock-in amplifier for extracting the said share of the output signal. When a lock-in amplifier is used, the control unit may be configured to generate a reference signal for the lock-in amplifier, the reference signal having a frequency corresponding to the frequency change or the average or effective frequency change. The said electrical circuit for frequency selectively measuring a certain share of the output signal may, of course, be given by or part of a computer used for analyzing the output signal. Alternatively, a computer for analyzing the output signal may be used in addition to an upstream electrical circuit, such as a filter or lock-in amplifier.

Typically, the difference between the optical length of the first optical path and the optical length of the second optical path is such that the time difference between first signal propagation delay and the second signal propagation delay corresponds to a time interval in which the beat frequency is changed by at least 1 kHz, preferably by at least 10 kHz or 100 kHz or 1 MHz, even though normally by not more than 10 GHz, preferably by not more than 1 GHz or 100 MHz. The fact that the frequency change is large helps suppressing noise when filtering the output signal for frequency selectively measuring the share of the output signal having a frequency corresponding to the frequency change. The reason is that dominant noise frequencies are typically rather small. The time difference between the first signal propagation delay and the second signal propagation delay, i.e. between the signal propagation of the signal propagating, as the optical beat signal, from the laser system through the first optical path to the photosensitive element of the transmitter antenna and, converted into the terahertz radiation, from the transmitter antenna to the receiver antenna and the signal propagation delay of the optical beat signal propagating from the laser system through the second optical path to the photosensitive element of the receiver antenna, should, however, small enough to make sure that the terahertz radiation generated by the transmitter antenna may be detected coherently by the receiver antenna.

It should be clear that the frequency change does not need to be constant and, therefore, does not need to be always larger than any of the said values.

Depending on how the beat frequency is modulated, the frequency change caused by the differing signal propagation delays may be time dependent. In this case, the mentioned minimum values for the said frequency change - and also for the frequency change rate - are understood to be values that are reached or exceeded at least temporarily.

In order to achieve this, the control unit may be configured to tune or switch the at least one of the first wavelength and the second wavelength such that the beat frequency of the optical beat signal scans or jumps over a frequency interval of at least 1 kHz or at least 10 kHz or at least 100 kHz or at least 1 MHz and/or that the frequency change rate is at least 1 THz/s or at least 10 THz/s or at least 100 THz/s. The relatively large frequency change rate helps to keep the difference between the optical lengths of the first and the second optical paths relatively small, typically less than 10 m or even less than 1 m.

The suggested method for generating and detecting terahertz radiation may be carried out using the system described here. This method comprises:
- generating an optical beat signal by superimposing a first component of laser light having a first wavelength and a second component of laser light having a second wavelength different from the first wavelength;
- modulating a beat frequency of the optical beat signal, for example periodically or by a frequency sweep, by tuning or switching at least one of the first wavelength and the second wavelength such that the optical beat signal scans or jumps over a frequency interval of at least 1 kHz or at least 10 kHz or at least 100 kHz or at least 1 MHz at a frequency change rate of at least 1 THz/s or at least 10 THz/s or at least 100 THz/s;
- activating a transmitter antenna and a receiver antenna by feeding the optical beat signal to a photosensitive element of the transmitter antenna via a first optical path and to a photosensitive element of the receiver antenna via a second optical path; and
- analyzing an output signal of the receiver antenna,
wherein, due to a difference between an optical length of the first optical path and an optical length of the second optical path, a first signal propagation delay of a signal propagating, as the optical beat signal, from the laser system through the first optical path to the photosensitive element of the transmitter antenna and, converted into the terahertz radiation having a frequency corresponding to the beat frequency, from the transmitter antenna to the receiver antenna, differs from a second signal propagation delay of the optical beat signal propagating from the laser system through the second optical path to the photosensitive element of the receiver antenna by a time difference corresponding to a time interval in which the beat frequency is changed by a frequency change of at least 0.1 kHz or at least 10 kHz or at least 100 kHz or at least 1 MHz and wherein the output signal is analyzed by frequency selectively measuring a share of the output signal having a frequency corresponding to the said frequency change. Typically, the said frequency change is not larger than 10 GHz, preferably not larger than 1 GHz or 100 MHz so that it may be achieved moderate differences between the optical lengths of the two optical paths and by an electronically feasible modulation of the respective wavelength or wavelengths. The beat frequency may, in particular, be modulated periodically at a modulation frequency of at least 1 MHz or at least 10 MHz or at least 100 MHz.

The method may, in particular, be used for analyzing a sample by arranging the sample in a ray path between the transmitter antenna and the receiver antenna and by measuring a change of the output signal caused thereby. The sample may be arranged between the transmitter antenna and the receiver antenna for analyzing transmission properties or such that reflective properties of the sample or scattering of terahertz radiation by the sample can by analyzed.

In typical embodiments, the laser system comprises a first laser for generating the first component of laser light, a second laser for generating the second component of laser light, and a coupler for superimposing the first and the second components of laser light, at least one of the first laser and the second laser being tuneable or switchable and the control unit being configured for tuning or switching at least one of the first wavelength and the second wavelength by controlling the first laser and/or the second laser or by controlling a phase or wavelength modulator provided between one of the lasers and the coupler.

Each or the at least one of the lasers may be, for example, a DFB laser (distributed feedback laser) or a DBR laser (distributed Bragg reflector laser). The at least one tuneable or switchable laser may be a Y-branch laser. Lasers of this kind are known and described, e.g., in prior art documents US 6,728,279 B1 and EP 1 058 358 B1. These types of lasers have the advantage that they may easily be tuned or switched at a sufficiently high speed. This may be done by corresponding electric signals. Thus, the control unit may comprise corresponding electronic components configured for generating an electric control signal for tuning or switching the at least one of the lasers or the phase or wavelength modulator at the required speed. In order to allow a sufficiently fast modulation with a sufficiently large modulation amplitude, lasers may also be combined with micro-electro-mechanical system as described in "High-speed ultra-broad tuning MEMS-VCSELs for imaging and spectroscopy," V. Jayaraman et al., Proc. SPIE 8763, Smart Sensors, Actuators, and MEMS VI, 87630H (May 17, 2013). The two lasers may be arranged on a common substrate in order to avoid any unwanted additional phase or wavelength variations.

Each of the first and the second optical paths may be given by or comprise a waveguide, e.g. a single mode fibre, preferably of a polarization maintaining type. The coupler may have two outputs where the same optical beat signal is outputted. The waveguide or each of the waveguides may connect and optically couple one of these outputs with the photoconductive element of one of the antennas.

The difference between the first wavelength and the second wavelength may be chosen so that the beat frequency is at least 0.1 THz and/or at most 10 THz. In this case, the optical beat signal is suited for generating the terahertz radiation with corresponding frequencies, for which available terahertz antennas have proven to be efficient. Typically, the wavelengths of the two components of laser light can be about 800 nm or between 1000 nm and 1700 nm, preferably around 1300 nm or between 1500 and 1650 nm, so that components available for usual sensors or for telecommunication purposes may be used. The antennas will be particularly efficient if the photosensitive element of the transmitter antenna is a photodiode while the photosensitive element of the receiver antenna is a photoconductor or a nonlinear photonic crystal.

The control unit may be configured to tune or switch the at least one of the first wavelength and the second wavelength and thereby modulate the beat frequency of the optical beat signal periodically and/or in a sinusoidal or sawtooth waveform. It may, in particular, be configured for modulating the beat frequency at a modulation frequency of at least 1 MHz or at least 10 MHz or at least 100 MHz.

When the beat frequency is modulated periodically so that the beat frequency shows an oscillation, the frequency interval scanned by the oscillating beat frequency has, preferably, the same or at least the same size as the modulation frequency or as half the modulation frequency. Preferably, the difference between the optical length of the first optical path and the optical length of the second optical path is such that the time difference between first signal propagation delay and the second signal propagation delay corresponds to 0.5 times a period of the oscillation or to (0.5 + n) times this period with any integer n. In this way, the frequency difference between the optical beat signal arriving at the receiver antenna and the terahertz radiation arriving there at the same time and, thereby, the frequency of the output signal can be advantageously maximized. In this case, the system is particularly efficient if the modulation frequency corresponds to the size of the scanned frequency interval or twice the scanned frequency interval as this results in a spectrum of the optical beat signals containing components differing in their frequencies by a difference corresponding to the maximum frequency difference between the optical beat signal arriving at the receiver antenna and the terahertz radiation arriving there at the same time.

Exemplary embodiments of the invention are described here below with reference to the figures.
- Fig. 1: is a schematic view of a system which may be used for generating and detecting terahertz radiation and for measurements using the tera-hertz radiation, the system comprising a transmitter antenna and a receiver antenna as well as two laser light sources for generating an optical beat signal activating the two antennas.
- Fig. 2: is a diagram showing how a beat frequency of the optical beat signal can be modulated in a first embodiment, the beat frequency being shown as a function of time.
- Fig. 3: is a diagram showing how a light frequency of a laser light component generated by one of the two laser light sources is changed and illustrating how the beat frequency is modulated thereby in a second embodiment.
- Fig. 4: is a diagram showing how the light frequency of the laser light component generated by one of the two laser light sources is changed and how the beat frequency is modulated in a third embodiment.
- Fig. 5: is a diagram showing how the light frequenciy of the laser light component generated by one of the two laser light sources is changed and how the beat frequency is modulated in a fourth embodiment.
- Fig. 6: is a schematic view of one of the two laser light sources, the laser light source comprising a modulator in addition to an actual laser.
- Fig. 7: is a diagram showing a control signal for controlling the modulator, an influence of this control signal on a refractive index of the modulator and a time dependence of a wavelength of the laser light component generated by the laser light source, all of them being shown as functions of time.
- Fig. 8: is a schematic view of an alternative to the laser light source shown in Fig. 6.
- Fig. 9: is a schematic view of another alternative to the laser light source shown in Fig. 6.
- Fig. 10: is a schematic view of a further alternative to the laser light source shown in Fig. 6.

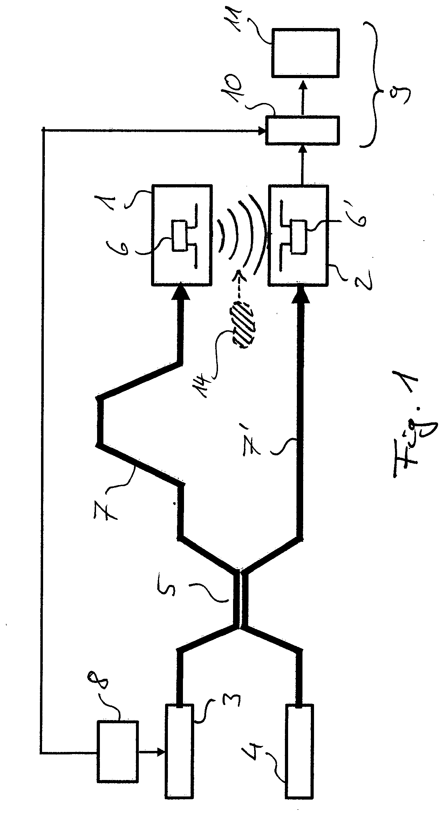

As illustrated in Fig. 1, the system for measurements by means of terahertz radiation according to the embodiments described here comprises a transmitter antenna 1 for generating the terahertz radiation and a receiver antenna 2 for detecting the terahertz radiation. The terahertz radiation is illustrated schematically as waves propagating from the transmitter antenna 1 to the receiver antenna 2. The system further comprises a first laser light source 3 for generating a first component of laser light having a first wavelength, a second laser light source 4 for generating a second component of laser light having a second wavelength different from the first wavelength and a coupler 5 for superimposing the first and the second components of laser light and for emitting an optical beat signal thereby obtained. The two laser light sources 3 and 4 as well as the coupler 5 may be arranged on a common substrate.

Each of the transmitter antenna 1 and the receiver antenna 2 comprises a photosensitive element 6, 6'. Preferably, the photosensitive element 6 of the transmitter antenna 1 is a photodiode while the photosensitive element 6' of the receiver antenna 2 is a photoconductor or a nonlinear photonic crystal. Apart from that, the transmitter antenna 1 and the receiver antenna 2 are ordinary terahertz antennas.

The coupler 5 has two outputs for outputting the optical beat signal. A first of them is optically coupled to the photosensitive element 6 of the transmitter antenna 1 via a first optical path 7 for activating the transmitter antenna 1 by the optical beat signal while a second of the outputs is optically coupled to the photosensitive element 6' of the receiver antenna 2 via a second optical path 7' for activating the receiver antenna 2 by the same, even though less delayed, optical beat signal. Each of the first and the second optical paths 7, 7' comprises a waveguide, the optical waveguide of the first optical path 7 being longer than the waveguide of the second optical path 7' as schematically illustrated in Fig. 1. A length of the first optical path 7 may be, for example, between 30 cm and 150 cm longer than a length of the second optical path 7' or vice versa. The waveguides are, in the shown example, given by polarization maintaining single mode fibres.

A difference between the first wavelength and the second wavelength is chosen so that the beat frequency is between 0.1 THz and 10 THz, a frequency of the terahertz radiation having the same size. Absolute values of the two wavelengths are, in the examples presented here, about 800 nm or between 1500 and 1650 nm depending on what kind of lasers are used. Optoelectronic components used for the lasers and for the terahertz antennas may be made applying III-V semiconductor systems such as In-Ga-AI-As-P on InP or GaAs substrates.

The system shown in Fig. 1 furthermore comprises a control unit 8 for controlling the first laser light source 3 and an evaluation unit 9 for analyzing an output signal of the receiver antenna 2.

The first laser light source 3 is tuneable or switchable, and the control unit 8 is configured for tuning or switching the first wavelength by controlling the first laser light source 3. Of course, instead or additionally, the second light source 4 could be controlled accordingly. To be more precise, the control unit 8 is configured to tune or switch the first wavelength such that a thereby modulated beat frequency of the optical beat signal scans or jumps over a frequency interval of, for example, between 10 MHz and 200 MHz at an average frequency change rate of preferably more than 100 THz/s.

A difference between an optical length of the longer or shorter first optical path 7 and an optical length of the shorter (or longer) second optical path 7' is such that a first signal propagation delay of a signal propagating, as the optical beat signal, from the coupler 5 through the first optical path 7 to the photosensitive element 6 of the transmitter antenna 1 and, converted into the terahertz radiation, from the transmitter antenna 1 to the receiver antenna 2, differs from a second signal propagation delay of the optical beat signal propagating from the coupler 5 through the second optical path 7' to the photosensitive element 6' of the receiver antenna 2 by a time difference Dt corresponding to a time interval in which the beat frequency, modulated that way, is changed by a frequency change Df of, in this example, between 10 MHz and 100 MHz.

A consequence is that a frequency of the optical beat signal arriving at the photoconductive element 6' of the receiver antenna 2 differs from a frequency of the terahertz radiation arriving at the receiver antenna 2 at the same time by a frequency difference Df which corresponds to the said frequency change. Therefore, a wave of the terahertz radiation received by the receiver antenna 2 is, so to say, scanned by the optical beat signal activating the receiver antenna 2 due to the frequency difference Df, so that the output signal of the receiver antenna 2 or, more precisely, a contribution to or share of this output signal caused by the terahertz radiation coming from the transmitter antenna 1, has a frequency corresponding to the said frequency difference Df. An amplitude of this output signal or the said share of the output signal has an amplitude directly reflecting a strength of the received terahertz radiation. It should be noted that, in the example presented here, there is neither any variable phase shifting or propagation time delaying device nor any optical amplifier anywhere in the optical paths 7, 7' between the coupler 5 and the transmitter antenna 1 or the receiver antenna 2.

Therefore, the system shown in Fig. 1 can be used for efficiently analyzing a sample 14 by placing the sample 14 between the transmitter antenna 1 and the receiver antenna 2 as illustrated in Fig. 1 and by analyzing how the output signal is influenced thereby, i.e. by measuring a change of the output signal caused by the sample 14.

It should be noted that equivalent results could be obtained when the first optical path 7 is shorter than the second optical path 7' if the difference between the optical lengths is sufficiently large so that the first signal propagation delay of the signal propagating, as the optical beat signal, from the coupler 5 through the first optical path 7 to the photosensitive element 6 of the transmitter antenna 1 and, converted into the terahertz radiation, from the transmitter antenna 1 to the receiver antenna 2, differs from the second signal propagation delay of the optical beat signal propagating from the coupler 5 through the second optical path 7' to the photosensitive element 6' of the receiver antenna 2 by the desired time difference Dt. It does not matter, here, whether the first signal propagation delay or the second signal propagation delay is larger or smaller as long as the resulting time difference Dt has the required size or absolute value.

The evaluation unit 9 comprises an electrical circuit 10 configured for frequency selectively measuring the share of the output signal having a frequency corresponding to the frequency change or an average or effective frequency change of the optical beat signal over the said time difference Dt, i.e. corresponding to the said frequency difference Df or an average or effective value of the frequency difference Df which may be time dependent. In addition to the electrical circuit 10, the evaluation unit 9 further comprises a computer 11 for further analyzing the output signal digitally.

In the present example, the electrical circuit 10 is a lock-in amplifier for extracting the said share of the output signal. In this case, the control unit 8 generates a reference signal which is fed to the lock-in amplifier as a reference, the reference signal having a frequency corresponding to the frequency change or the average or effective frequency change. In alternative embodiments, the electrical circuit 10 may be or comprise a high-filter for extracting the share of the output signal having the frequency corresponding to the frequency difference Df. The output signal may also be analyzed by analyzing in-phase and quadrature components so that phase information can be obtained in addition to the strength of the received terahertz radiation. In all these cases, the output signal is analyzed by frequency selectively measuring the share of the output signal having a frequency corresponding to the said frequency change or frequency difference Df and by efficiently suppressing noise.

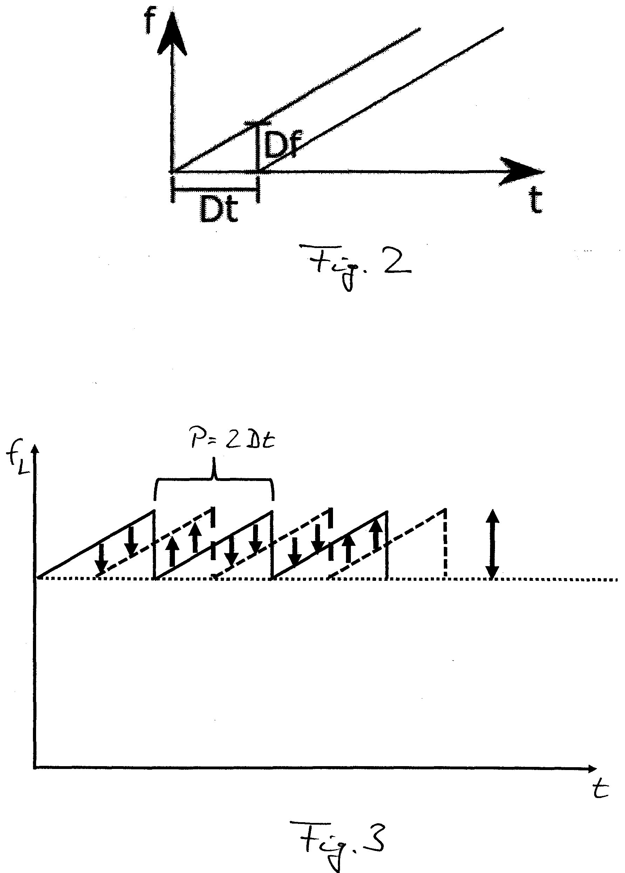

The beat frequency of the optical beat signal can be modulated in different ways by the correspondingly programmed control unit 8. As shown in Fig. 2, where the beat frequency f is shown as a function of the time t, the beat frequency f may, for example, be modulated by a frequency sweep so that the beat frequency f is increased or decreased linearly. This is achieved by linearly increasing or decreasing a light frequency of the first component of laser light, i.e. by decreasing or increasing the first wavelength accordingly. In this case, the frequency difference Df seen between the frequencies of the received terahertz wave and the optical beat signal at the receiver antenna 2 and corresponding to the frequency change during the time interval corresponding to the time difference Dt is constant.

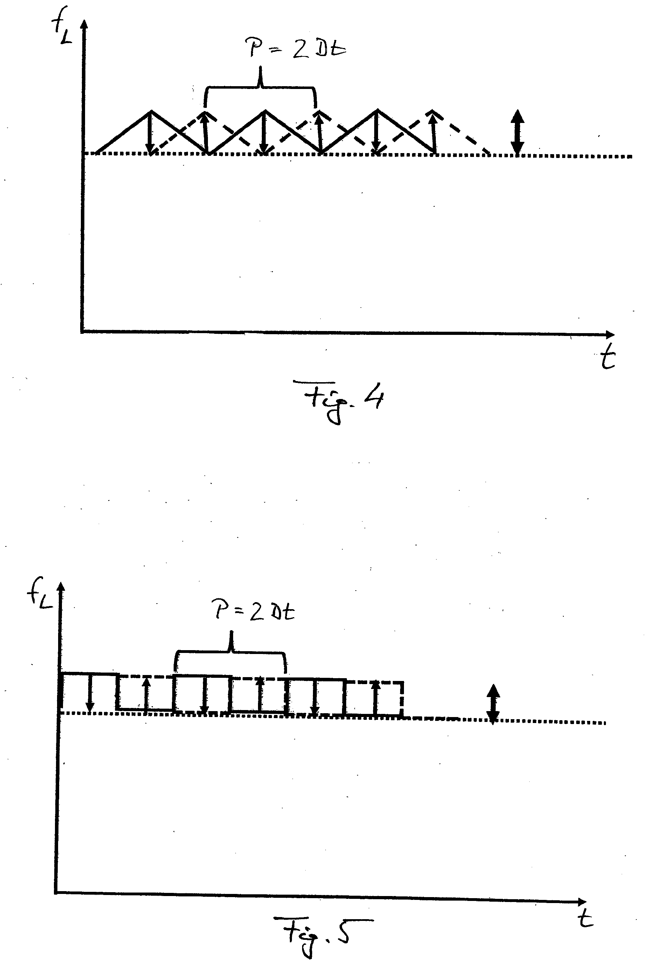

In other embodiments, the beat frequency is modulated periodically, for example in one of the ways illustrated in Figs. 3 to 5. In all of these cases, the beat frequency is modulated at a modulation frequency of at least 100 MHz. To this end, the control unit 8 is configured to tune or switch the first wavelength and to thereby modulate the beat frequency of the optical beat signal periodically at the modulation frequency, for example by tuning the first wavelength and the corresponding light frequency f_{L} in a sawtooth waveform as shown in Fig. 3 or in a triangular waveform as shown in Fig. 4 or by switching them periodically as shown in Fig. 5. Alternatively, the first wavelength and the corresponding light frequency f_{L} can also be tuned and the beat frequency thereby modulated in a sinusoidal.

In each of the Figs. 3 to 5, the light frequency f_{L} of the first component of laser light is shown by a solid line as a function of the time t. A time dependence of the beat frequency f, of course, varies accordingly if the second wavelength is kept constant. The same time dependence is shown in each of the Figs. 3 to 5 once more with a time delay corresponding to the time difference Dt explained before. In these cases, the time difference Dt caused by the difference between the optical length of the first optical path 7 and the optical length of the second optical path 7' and the propagation delay of the terahertz signal is chosen to be exactly 0.5 times a period P of the time dependence of the light frequency f_{L} or the beat frequency, respectively. Alternatively, the time difference Dt could be chosen to be (0.5 + n)Dt with any integer n. In this way, the frequency difference Df between the optical beat signal arriving at the receiver antenna 2 and the terahertz radiation arriving there at the same time and, thereby, the frequency of the output signal is maximized. In Figs. 3 to 5, the maximum values assumed by the frequency difference Df are illustrated by single arrows. In the embodiment illustrated in Fig. 3, these maximum values, which are between 10 MHz and 200 MHz, correspond to 0.5 times a size of the frequency interval scanned by the modulated beat frequency or an interval scanned by the tuned light frequency f_{L}. In the embodiments illustrated in Figs. 4 and 5, these maximum values correspond to the size of the frequency interval scanned by the modulated beat frequency and of the interval scanned by the tuned light frequency f_{L}. These intervals are illustrated by double arrows in Fig. 3 to 5. The frequency interval scanned by the oscillating beat frequency has, in these embodiments, the same as the modulation frequency or as half the modulation frequency.

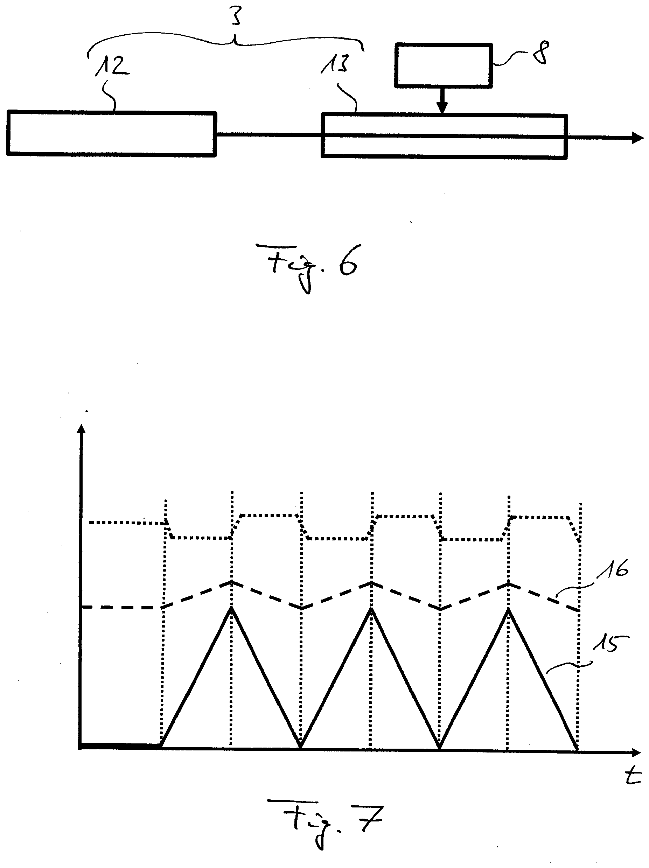

Fig. 6 shows the first laser light source 3 and the control unit 8. The first laser light source comprises a first laser 12 and a phase modulator 13 which is arrange between the first laser 12 and the coupler 5. The second laser light source 4 may, of course, have the same structure, even though it is sufficient if only one of the light sources 3 and 4 comprises a wavelength shifter such as the phase modulator 13. The control unit 8 is, in this case, configured for tuning or switching the first wavelength by controlling the phase modulator 13 provided between laser 12 and the coupler 5.

Fig. 7 shows an electric control signal 15 generated by the control unit 8 for controlling the modulator 13 according to the embodiment shown in Fig. 4, an influence of this control signal 15 on a refractive index 16 of the modulator 13 and, as a dotted line, a corresponding time dependence of the first wavelength, all of them being shown as functions of the time t. The control unit 8 comprises electronic components configured for generating the electric control signal 15 as shown. Of course, the control signal 15 will look different for the other embodiments described above.

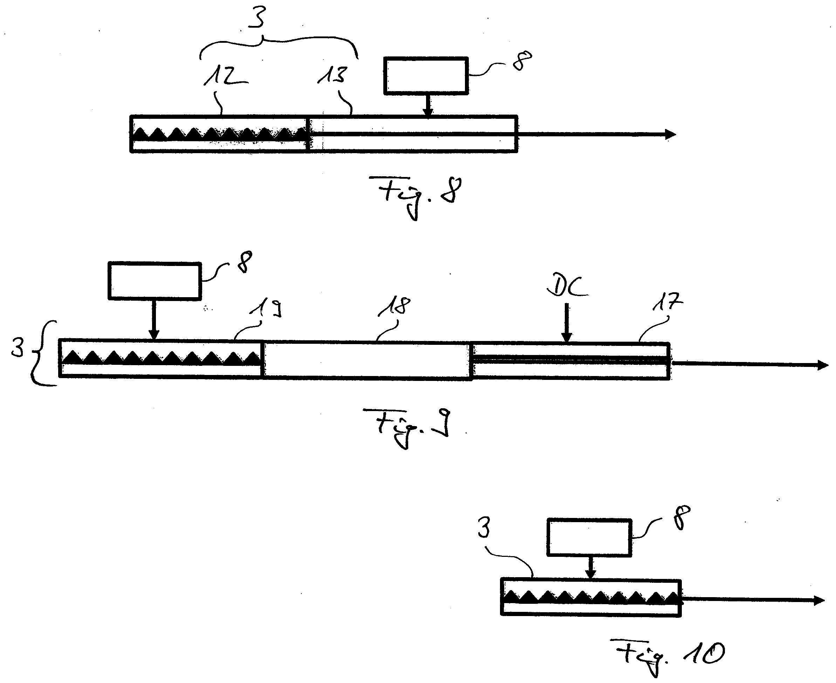

Fig. 8 shows an alternative laser light source 3 that may be used instead of the example shown in Fig. 6. In this case, the first laser 12 is a DFB laser which is integrated with the modulator 13 as one semiconductor system.

Fig. 9 shows another alternative laser light source 3 that may be used instead. In this case, the laser light source comprises a gain section 17 fed with direct current DC, a passive section 18 and a Bragg reflector 19 which is subject to the control signal 15 generated by the control unit 8.

Fig. 10 shows a further alternative laser light source 3 that may also be used instead of the laser light sources 3 described before. In this case, the laser light source 3 is a DFB laser, and the control unit 8 feeds the DFB laser with a current composed of a direct current needed for a gain as well as a high frequency component corresponding to the control signal 15 so that the control unit 8 is configured for tuning or switching the first wavelength by directly controlling the DFB laser.

## Claims

1. A system for measurements by means of terahertz radiation, the system comprising:
a transmitter antenna (1) for generating the terahertz radiation;
a receiver antenna (2) for detecting the terahertz radiation;
a laser system for generating a first component of laser light having a first wavelength and a second component of laser light having a second wavelength different from the first wavelength and for emitting an optical beat signal obtained by superimposing the first and the second components of laser light;
a control unit (8) for controlling the laser system; and
an evaluation unit (9) for analyzing an output signal of the receiver antenna,
wherein each of the transmitter antenna (1) and the receiver antenna (2) comprises a photosensitive element (6, 6'),
wherein the laser system is optically coupled to the photosensitive element (6) of the transmitter antenna (1) via a first optical path (7) and to the photosensitive element (6') of the receiver antenna (2) via a second optical path (7') for activating the transmitter antenna (1) and the receiver antenna (2) by the optical beat signal,
**characterized in that**
the control unit (8) is configured to tune or switch at least one of the first wavelength and the second wavelength such that a thereby modulated beat frequency of the optical beat signal scans or jumps over a frequency interval of at least 1 kHz at a frequency change rate of more than 1 THz/s,
wherein a difference between an optical length of the first optical path (7) and an optical length of the second optical path (7') is such that a first signal propagation delay of a signal propagating, as the optical beat signal, from the laser system through the first optical path (7) to the photosensitive element (6) of the transmitter antenna (1) and, converted into the terahertz radiation having a frequency corresponding to the beat frequency, from the transmitter antenna (1) to the receiver antenna (2), differs from a second signal propagation delay of the optical beat signal propagating from the laser system through the second optical path (7') to the photosensitive element (6') of the receiver antenna (2) by a time difference (Dt) corresponding to a time interval in which the beat frequency, modulated that way, is changed by a frequency change of at least 0.1 kHz.

2. The system of claim 1, **characterized in that** the evaluation unit (9) comprises an electrical circuit (10) configured for frequency selectively measuring a share of the output signal having a frequency corresponding to the frequency change or an average frequency change of the optical beat signal over the said time difference (Dt).

3. The system of any of claims 1 or 2, **characterized in that** the laser system comprises a first laser (12) for generating the first component of laser light, a second laser for generating the second component of laser light and a coupler (5) for superimposing the first and the second components of laser light, at least one of the first laser (12) and the second laser being tuneable or switchable and the control unit (8) being configured for tuning or switching at least one of the first wavelength and the second wavelength by controlling the first laser (12) and/or the second laser or by controlling a phase or wavelength modulator (13) provided between one of the lasers (12) and the coupler (5).

4. The system of any of claims 1 to 3, **characterized in that** at least one of the first and the second optical paths (7, 7') comprises a waveguide.

5. The system of any of claims 1 to 4, **characterized in that** a difference between the first wavelength and the second wavelength is chosen so that the beat frequency is at least 0.1 THz and/or at most 10 THz.

6. The system of any of claims 1 to 5, **characterized in that** the control unit (8) is configured to tune or switch the at least one of the first wavelength and the second wavelength and thereby modulate the beat frequency of the optical beat signal periodically and/or in a sinusoidal or sawtooth waveform.

7. The system of claim 6, **characterized in that** the control unit (8) is configured for modulating the beat frequency at a modulation frequency of at least 1 MHz or at least 10 MHz or at least 100 MHz.

8. The system of any of claims 1 to 7, the control unit (8) is configured to tune or switch the at least one of the first wavelength and the second wavelength such that the beat frequency of the optical beat signal scans or jumps over a frequency interval of at least 10 kHz or at least 100 kHz or at least 1 MHz and/or that the frequency change rate is at least 10 THz/s or at least 100 THz/s.

9. The system of any of claims 1 to 8, **characterized in that** the difference between the optical length of the first optical path (7) and the optical length of the second optical path (7') is such that the time difference (Dt) between the first signal propagation delay of the signal propagating from the laser system through the first optical path (7) to the photosensitive element (6) of the transmitter antenna (1) and from the transmitter antenna (1) to the receiver antenna (2) and the second signal propagation delay of the optical beat signal propagating from the laser system through the second optical path (7') to the photosensitive element (6') of the receiver antenna (2) corresponds to a time interval in which the beat frequency is changed by at least 1 kHz or at least 10 kHz or at least 100 kHz or at least 1 MHz and/or by not more than 10 GHz or not more than 1 GHz or not more than 100 MHz.

10. A method for generating and detecting terahertz radiation, the method comprising:
generating an optical beat signal by superimposing a first component of laser light having a first wavelength and a second component of laser light having a second wavelength different from the first wavelength;
modulating a beat frequency of the optical beat signal by tuning or switching at least one of the first wavelength and the second wavelength such that the optical beat signal scans or jumps over a frequency interval of at least 1 kHz at a frequency change rate of more than 1THz/s;
activating a transmitter antenna (1) and a receiver antenna (2) by feeding the optical beat signal to a photosensitive element (6) of the transmitter antenna (1) via a first optical path (7) and to a photosensitive element (6') of the receiver antenna (2) via a second optical path (7'); and
analyzing an output signal of the receiver antenna (2),
wherein, due to a difference between an optical length of the first optical path (7) and an optical length of the second optical path (7'), a first signal propagation delay of a signal propagating, as the optical beat signal, from the laser system through the first optical path (7) to the photosensitive element (6) of the transmitter antenna (1) and, converted into the terahertz radiation having a frequency corresponding to the beat frequency, from the transmitter antenna (1) to the receiver antenna (2), differs from a second signal propagation delay of the optical beat signal propagating from the laser system through the second optical path (7') to the photosensitive element (6') of the receiver antenna (2) by a time difference (Dt) corresponding to a time interval in which the beat frequency is changed by a frequency change of at least 0.1 kHz, and
wherein the output signal is analyzed by frequency selectively measuring a share of the output signal having a frequency corresponding to the said frequency change.

11. The method of claim 10, **characterized in that** a sample (14) to be analyzed is arranged in a ray path between the transmitter antenna (1) and the receiver antenna (2) and that a change of the output signal caused thereby is measured.

12. The method of any of claims 10 or 11, **characterized in that** it is carried out using the system of any of claims 1 to 9.
